# EUROPEAN PATENT SPECIFICATION

(11) **EP 2 185 636 B1**
(45) Date of publication and mention of the grant of the patent: **06.01.2016**
(21) Application number: 08788444.1
(22) Date of filing: 22.08.2008
(51) Int. Cl.: C08J 7/04, B32B 27/12, C09D 175/04

(54) **INSULATION MATERIALS**
ISOLIERMATERIALIEN
MATÉRIAUX D'ISOLATION

(30) Priority: 22.08.2007 GB 0716402
(43) Date of publication of application: 19.05.2010
(73) Proprietor: Hunt Technology Limited, Rickmansworth, Hertfordshire WD3 1JJ (GB)
(72) Inventor: SQUIRES, Leslie, James, Rosemount Blairgourie PH10 6LA (GB)
(74) Representative: Greaves Brewster LLP
(86) International application number: PCT/GB2008/002885
(87) International publication number: WO 2009/024804

(56) References cited:
- EP-A- 0 099 335
- EP-A- 1 400 348
- WO-A-98/12494
- WO-A-2008/142453

## Description

This invention relates to the building and construction industries and more particularly, but not exclusively, to insulation materials, structures and products incorporating low emissivity or infrared reflective insulation for insulating roofs, walls and floors of buildings.

The terms "building" and "construction", wherever used in this specification include, without limitation, domestic dwellings and industrial buildings, temporary dwellings or temporary industrial buildings, huts, agricultural constructions, such as barns, textile fabric building structures, caravans and mobile homes, and building and construction components used in buildings, such as water tanks and piping.

"Emissivity" is a known expression of the amount of energy radiated by a material, matter or surface. An ideal material or surface emitting the highest theoretical level of radiant energy would have an emissivity, ε, of 1 and an ideal material or surface emitting no radiant energy would have an emissivity of 0. In practice all objects have an emissivity between 0 and 1. All emissivity values (ε) herein are given at a temperature of 25 C.

The terms "reflective" and "infrared reflective", wherever used in this specification, indicate reflection of at least some electromagnetic radiation in the wavelength region 0.75 µm to 1000 µm. Furthermore, the terms "reflective" and "infrared reflective" are used herein to indicate emissivity (ε) of less than 0.5.

There is much focus on the subject of energy efficient buildings, both industrial and domestic dwellings. A leading organisation in the design of energy efficient building is the Passivhaus Institut in Darmstadt, Germany which has links to the Building Research Establishment (BRE) in the U.K. amongst others. A Passivhaus takes into account energy efficiency from its early design phase and includes the following basic features:

| | |
|---|---|
| Compact form and good insulation | All components of the exterior shell of the house are insulated to achieve a U-factor that does not exceed 0.15 W/(m²K). |
| Building envelope air-tightness | Air leakage through unsealed joints must be less than 0.6 times the house volume per hour. |

Such energy efficient buildings incorporate very high levels of insulation in all external-facing surfaces of the structure - roofs, walls and floors. Energy efficient buildings seek, by design, to use insulation to limit heat loss by the three routes of heat transfer, namely convection, conduction and radiation and in addition to limit heat loss through the mass transfer of air by uncontrolled leakage of air from the building.

Air leakage is seen as an increasingly important factor in energy efficiency and is now included in U.K building regulations: "The Building Regulations 2000: Conservation of fuel and power", Approved Documents Part L introduced in April 2006.

The combination of high levels of insulation and low levels of air leakage saves energy by limiting the loss of heat from the building in cold climates and by limiting the requirement for air conditioning in warm climates. However, it increases problems of excessive moisture build-up within the building. A typical family of four people in a house can generate between 7 and 15 litres of water vapour on an average day. If the relative humidity of the air inside the house is allowed to increase uncontrollably, then problems due to excess moisture such as condensation, mould growth and an unhealthy atmosphere can occur.

To deal with excessive moisture a number of mechanical solutions are commonly used ranging from simple extract fans which pump warm, moist air from the building and hence lose valuable heat, to de-humidification systems fitted with heat exchangers to recover the heat from the warm, moist air being vented. Such systems themselves are not without problems, including noise and the requirement for maintenance in addition to using energy to function.

Insulation is commonly provided between and, or over or under rafters at roof level, or between and over joists at the floor level of the roof loft. Similarly, insulation may be provided between and over the studs of beams of walls and floors of timber or metal framed buildings.

Insulation may comprise glass or mineral wool batts or sheets. These are open structures, meaning that they incorporate fibres which have air spaces between the fibres that provide pathways for air to flow through the insulation structure as a whole. These insulation materials therefore cannot in themselves contribute to the reduction of air leakage in a building.

Rigid foam boards in which still air or other gas is trapped in a polymer matrix, usually polyurethane (PUR), are commonly used as insulation products. However, although these products have low thermal conductivities, typically 0.023 W/m².K, they are difficult to fit neatly between rafters or joists due to inconsistencies in rafter spacing and the natural bending and warping of the timbers. Air leakage will therefore occur through the gaps between the PUR rigid board and the timbers. Similarly air leakage can occur through gaps between adjacent PUR boards fitted over or under rafters, for example, especially if the roof is a complex shape requiring cutting of the PUR boards.

It is therefore advantageous for any thermal insulation installed in a building to contribute significantly to a reduction in air leakage whilst also allowing the passage of moisture vapour through it and hence through the building envelope. Excessive moisture can then diffuse through the insulation structure, reducing or obviating the requirement for mechanical ventilation systems.

It is known that materials that have infrared reflective or low emissivity surfaces can contribute to the thermal insulation of a building. Unventilated air spaces or cavities are good barriers to thermal conduction, whilst providing low emissivity surfaces adjacent to those air spaces improves the thermal barrier properties by reducing heat transfer across the air space by radiation. The properties of non-ventilated air spaces are well known and are described for example in BS EN ISO 6946:1996 which gives the relevant equations for the thermal resistance of air spaces depending on their thickness and angle, and the emissivity of the adjacent surfaces.

Patent Application WO 2006/024013 A1, assigned to E.I. du Pont de Nemours (Du Pont), describes how a moisture vapour permeable, low emissivity composite can be made by depositing a reflective metal layer onto a moisture vapour permeable sheet, especially a flash-spun, high density polyethylene sheet manufactured and marketed under the trade-name Tyvek® by E.I du Pont de Nemours and Company, Inc. (Wilmington, DE). Such a reflective layer, if left exposed on the surface of the base layer is prone to degradation, by oxidation for example, with a consequent loss of reflectivity or increase in emissivity. WO 2006/024013 A1 therefore discloses a method of providing a protective coating to the reflective layer without blocking the majority of the micropores of the base sheet which would otherwise result in a loss of moisture vapour permeability. However, the process of providing the protective layer over the reflective metal layer without blocking the micropores of the underlying sheet is complex and difficult to achieve, requiring the use of monomers and / or oligomeric or other low molecular weight precursors, preferably radiation polymerisable and capable of rapid evaporation in a vacuum vapour deposition process to form the coating. The coating is then polymerised or cross linked by exposure to a radiation source, such as electron beam or ultraviolet for example. Furthermore, whilst it provides sufficient protection to the reflective aluminium layer for the intended application as a reflective wall breather membrane or reflective house wrap, it does also reduce the moisture vapour permeability of the microporous substrate.

European patent specification EP1331316A1 assigned to Thermal Economics Limited, describes how a breathable reflective material comprising aluminium in the form of a foil, laminate, veneer or vapour deposited coating on a textile substrate may be used as a reflective breather membrane in a wall cavity of a frame construction of a building. The aluminium layer optionally may be coated with a protective layer to protect the metal surface. In EP 1 331 316 A1, moisture vapour permeability, also referred to as "breathability", is provided in two ways, by microperforation of an aluminium layer attached to a moisture vapour permeable support layer such as a textile layer or by vapour deposition of an aluminium layer directly onto the textile layer. Although, the moisture vapour permeable layer provides a low emissivity surface next to an air cavity in the building, the coated textile structure is not resistant to the passage of liquid water or air and so cannot contribute significantly to a reduction in heat loss by air leakage for example.

UK Patent GB 2 388 815 B, ascribed to Don & Low Ltd., discloses moisture vapour permeable or moisture vapour impermeable, reflective film laminates for use in the construction industry. The moisture vapour permeability may be provided by a microporous film or, preferably, by microperforation of the reflective film layer. The reflective layer is formed by deposition of a metal layer on the base film, for example by plasma deposition of aluminium, or by a metal or metallic material provided as an additive to a polymer melt. The reflective layer may be protected by bonding a second film layer over the reflective layer to form an ABA type structure where B is the reflective layer or material. However, only film layers comprising thermoplastic synthetic polymer materials are described and, where moisture vapour permeability is required, refererence is made only to microporous or microperforated versions of those film layers. Reflective layers added to microporous films are prone to mechanical and oxidative degradation and protection is difficult without blocking the micropores of the film, as referred to already in the Du Pont patent application WO 2006/024013 A1. The Don & Low Patent does not address this issue but states a preference for microperforated film based structures. The advantage of microperforated film based structures is that the reflective metal layer can be well protected by providing an overlying film layer sandwiching the reflective material and thereby enabling it to withstand long periods of exposure even in aggressive environmental conditions. However, the microperforation of the film components means that the resistance to the passage of liquid water of products incorporating such film components is poor. The preferred structure disclosed in the Don & Low Patent, a reflective microperforated film thermally intermittently laminated to a polypropylene spunbond is manufactured commercially in the U.K. under the trade mark "Reflectashield"® by Don & Low Ltd. and has demonstrably poor liquid water resistance due to the presence of the microperforations in the reflective film components. Microperforation of insulation products or components also limits their usefulness in obviating or significantly reducing heat loss by air leakage. Although microperforated products have found use as roofing underlays, due to their poor performance their use in this application within Europe is now negligible. The use of Don & Low's Reflectashield® product is therefore confined to wall breather membranes where the requirements for air and liquid water resistance are modest.

WO 2004/054799 ascribed to Building Product Design Ltd. and Spunchem Africa Pty Ltd describes how a heat reflective aluminium foil, applied to a surface of a moisture vapour permeable substrate such as a nonwoven fabric, may be made porous by stretching the composite between rollers producing multiple discrete cracks in the foil surface. The properties of the finished product are not disclosed quantitatively nor is the issue of protection of the reflective surface addressed. Nevertheless it is clear that moisture vapour permeability is created in an otherwise moisture impermeable material by the creation of apertures in the form of "cracks" in the foil surface. Thus the resultant laminate is functionally equivalent to the microperforated reflective laminate described in Don & Low Patent GB 2 388 815 B and equally would find limited application due to relatively low air and liquid water resistances.

The invention has been conceived with a view to overcoming or mitigating at least one problem of the prior art.

According to a first aspect, the invention resides in an insulation material for use in, or when used in, building and/or construction, including an air impermeable, monolithic, dimensionally stable substrate layer bearing an overlying low-emissivity layer having an emissivity of less than 0.5, the substrate layer and the low-emissivity layer being liquid water impermeable and moisture vapour permeable, wherein the low emissivity layer is applied to the substrate layer as a thin organic coating containing a dispersion of infrared reflective matter.

The advantages of applying the coating onto the substrate layer, as opposed to using a reflective film consisting of the coating only, are those of cost, strength and dimensional stability. The preferred materials forming the coating, though advantageous in other ways, may be expensive, soft and highly elastic. In accordance with the invention therefore, it is advantageous to provide such materials in the form of a thin coating on the surface of a substrate layer, which is typically of a lower cost, stronger and more dimensionally stable.

The infrared reflective matter could also be incorporated directly into the substrate layer, rather than being added as a coating. However, since the substrate layer is typically of a heavier weight or thicker gauge than is obtainable in a thin coating, and indeed needs to be sufficiently thick to provide the strength to withstand subsequent handling and processing for its intended application, proportionally more of the expensive reflective matter would typically need to be used to attain the same emissivity performance. It follows that it is advantageous to provide the required low emissivity through the economic use of smaller quantities of reflective matter in a thin coating layer.

Relevant reflective, liquid water impermeable, moisture vapour permeable films useful in the context of the invention are the subject of UK patent application number GB 0709974.0 by Innovia Films Limited, the subject-matter of which is incorporated into this specification by reference.

The substrate layer and the coating are "moisture vapour permeable", (i.e. breathable) in the sense that they permit the passage of moisture vapour to an extent consistent with a desired moisture vapour transmission rate in the insulation material.

Moisture vapour permeability or moisture vapour transmission rate (MVTR) are provided throughout this specification based on testing with a Lyssy Model L80-5000 Water Vapor Permeability Tester at 100%/15% RH, i.e. 85% RH difference and 23 C.

As aforesaid, it is desirable for insulation materials to be as moisture vapour permeable as possible without sacrificing other desired standards of insulation properties. The substrate layer and the coating (i.e. the reflective coated substrate layer) may preferably have a moisture vapour transmission rate (MVTR) of at least 360 g/m²/day, more preferably at least 820 g/m²/day.

Advantageously, the substrate layer and low emissivity layer (coating) may be selected such that the reflective coated substrate layer has a moisture vapour permeability greater than 1000 g/m²/day.

The low emissivity layer provides an emissivity on the coated surface of the substrate layer of less than 0.5, preferably less than 0.3, more preferably less than 0.25 and most preferably less than 0.20.

The term "substrate film layer" will hereinafter be used to refer to the moisture vapour permeable, liquid water and air impermeable, monolithic, dimensionally stable, substrate layer. Further, in this specification, the terms sheet, film and membrane are regarded as equivalent terms unless otherwise stated.

The substrate film layer of the insulation material is "liquid water and air impermeable" in the sense that it helps to prevent or reduce both heat-transfer resulting from convection, and the ingress of liquid in the insulation material. Particularly due to its monolithic nature, the substrate film layer advantageously permits the passage of only insignificant amounts of air and liquid, if any. Further, the substrate layer is advantageously "dimensionally stable", in the sense that its dimensions do not change significantly (in the context of the invention) with changes in ambient temperature and, preferably, humidity. This ensures that the substrate provides effective support for the coating in use. Additionally, the substrate layer may advantageously be inelastic to prevent stretching and associated rupturing of the coating.

The substrate film layer of the invention may advantageously comprise films made from organic biopolymers such as suitable carbohydrates (starch, cellulose, glycogen, hemi-cellulose, chitin, fructans, inulin, lignin and/or pectin based materials), gums, proteins (animal or vegetable), colloids and hydrocolloids, polylactic, polygalactic and/or cellulose films in single sheet or multi-layer or composite sheet forms, including sheets based on paper technology. Multi-layer monolithic substrate films of the invention may be formed by coextrusion and/or by laminating. Particularly preferred materials for forming the substrate layer are cellulose and its derivatives and regenerated cellulose, for example that marketed by Innovia Films Limited under the trade mark Cellophane™.

Using a cellulose based substrate layer significantly increases resistance to UV light exposure as compared to those currently available products based on UV-stabilised polypropylene or polyethylene materials.

The thickness of the substrate film layer may vary depending on the anticipated application, with any values in the range from 15 µm to 350 µm being appropriate as the application may be. Layers at the thinner end of the thickness range have the advantage of lower cost per unit area as well as higher moisture vapour permeability for a given composition. The invention is not limited to any range of thickness of the substrate film layer, although the above range is preferred.

The thin adherent coating layer may be of any suitable thickness consistent with achieving a desired level of emissivity and/or moisture vapour permeability in the insulation material. For optimal balance between low emissivity and moisture vapour permeability, the coating weight may preferably lie in the range from 0.8 g/m² to 2.5 g/m².

The coating layer may be formed from solvent or water based dispersions or solutions or from 100% active systems requiring no solvent, by any of the known coating techniques without limit such as wire-rod coating, knife-over-roll, reverse-roll, gravure or other appropriate printing application techniques, extrusion, foam or spray coating.

The term "organic", is used herein to denote that the coating layer of the insulating material according to the first aspect of the invention comprises compounds having a carbon basis. The coating layer may advantageously comprise cellulose derivatives, synthetic organic polymers, naturally occurring polymers and their derivatives. Cellulose derivatives includes cellulose ethers, esters and nitrocellulose for example. Suitable synthetic organic polymers include polyacrylic esters, polyvinyl acetate copolymers, polyurethanes, polyamides such as nylon 6, nylon 6.6 and nylon 4.6, polysulfones and polyvinyl alcohol copolymers. Naturally occurring polymers includes, without limitation, starches, chitin, fructan, lignin, gums and proteins and their derivatives. Mixtures of the above materials, with or without the addition of inorganic additives (e.g. fumed silica), can also be used. However, it is generally preferred that such inorganic additives be substantially absent from the coating layer since such additives tend to increase the emissivity of the film.

The coating layer may advantageously comprise a block copolymer (or block copolymeric binder) preferably selected from materials which allow high transfer of moisture vapour by molecular diffusion. Suitable block copolymers will typically have polymer chains comprising high and low crystallinity sections. Examples of particularly suitable block copolymers are styrene butadiene resins and hydrophilic polyurethanes such as polyester urethanes, polyether urethanes, polycarbonate urethanes and polyurethane urea polymers or combinations of these.

The block copolymer (binder) is preferably selected from materials comprising a hard and soft segment polymer of the type designated for fabrics allowing breathability. Hydrophilic polyurethanes which may be used according to the invention as preferred material for the block copolymer binder are the reaction product of (a) polyisocyanates; and (b) polyols containing at least two isocyanate reactive groups; and (c) optionally an active hydrogen-containing chain extender.

Suitable polyisocyanates comprise aliphatic, cycloaliphatic, or aromatic polyisocyanates. As examples of suitable aliphatic diisocyanates, there may be mentioned 1,4-diisocyanatobutane, 1,6-diisocyanatohexane, 1,6-diisocyanato-2, 2 ,4-trimethylhexane and 1,1, 2-diisocyanatododecane, either alone or in admixture. Particularly suitable cycloaliphatic diisocyanates include 1,3- and 1,4-diisocyanatocyclohexane, 2,4-diisocyanato-1-methylcyclohexane, 1,3-diisocyanato-2-methylcyclohexane, 1-isocyanato-2-(isocyanatomethyl)cyclopentane, 1,1'-methylenebis [4-isocyanato-cyclohexane, 1,1-(1-methylethylidene) bis (4-isocyanatocyclohexanej, 5- isocyanato- 1-isocyanatomethyl- 1,3,3-trimethylcyclohexane (isophorone diisocyanate), 1,3- and 1,4bis(isocyanatomethyl)cyclohexane,1,1 -methylenebis[4-isocyanato-3 -methylcyclohexane, 1-isocyanato-4(or3)-isocvanatomethyl-1-methylcyclohexane, either alone or in admixture.

Particularly suitable aromatic diisocyanates include 1,4-diisocyanatobenzene, 1,1'-methylenebis[4-isocyanatobenzene], 2,4-diisocyanato-1-methylbenzene, 1,3-diisocyanato-2-methylbenzene, 1,5-diisocyanatonaphthalene, 1,1 -(1 -methylethylidene)bis[4-isocyanatobenzene, 1,3- and 1,4-bis(1-isocyanato-1-methylethyl)benzene, either alone or in admixture. Aromatic polyisocyanates containing 3 or more isocyanate groups may also be used such as 1,1',1"-methylidynetris[4-isocyanatobenzene] and polyphenyl polymethylene polyisocyanates obtained by phosgenation of aniline/formaldehyde condensates.

The polyols containing at least two isocyanate reactive groups may be polyester polyols, polyether polyols, polycarbonate polyols, polyacetal polyols, polyesteramide polyols or polythioether polyols. The polyester polyols, polyether polyols and polycarbonate polyols are preferred.

Suitable polyester polyols which may be used include the hydroxyl-terminated reaction products of polyhydric, preferably dihydric alcohols (to which trihydric alcohols may be added) with polycarboxylic, preferably dicarboxylic acids or their corresponding carboxylic acid anhydrides. Polyester polyols obtained by the ring opening polymerization of lactones such as e-caprolactone may also be included.

The polycarboxylic acids which may be used for the formation of these polyester polyols may be aliphatic, cycloaliphatic, aromatic and/or heterocyclic and they may be substituted (e.g. by halogen atoms) and saturated or unsaturated. As examples of aliphatic dicarboxylic acids, there may be mentioned, succinic acid, glutaric acid, adipic acid, suberic acid, azelaic acid, sebacic acid and dodecanedicarboxylic acid. As an example of a cycloaliphatic dicarboxylic acid, there may be mentioned hexahydrophthalic acid. Examples of aromatic dicarboxylic acids include isophthalic acid, terephthalic acid, ortho-phthalic acid, tetrachlorophthalic acids and 1,5-naphthalenedicarboxylic acid. Among the unsaturated aliphatic dicarboxylic acids which may be used, there may be mentioned fumaric acid, maleic acid, itaconic acid, citraconic acid, mesaconic acid and tetrahydrophthalic acid. Examples of tri- and tetracarboxylic acids include trimellitic acid, trimesic acid and pyromellitic acid.

The polyhydric alcohols which may be used for the preparation of the polyester polyols include ethylene glycol, propylene glycol, 1,3-propanediol, 1,3-butanediol, 1,4-butanediol, 1,5pentanediol, 1,6-hexanediol, neopentyl glycol, diethylene glycol, dipropylene glycol, triethylene glycol, tetraethylene glycol, dibutylene glycol, 2-methyl-1,3-pentanediol, 2,2,4-trimethyl-1,3-pentanediol, 1,4-cyclohexanedimethanol, ethylene oxide adducts or propylene oxide adducts of bisphenol A or hydrogenated bisphenol A. Triols or tetraols such as trimethylolethane, trimethylolpropane, glycerine and pentaerythritol may also be used. These polyhydric alcohols are generally used to prepare the polyester polyols by polycondensation with the above mentioned polycarboxylic acids, but according to a particular embodiment they can also be added as such to the reaction mixture.

Suitable polyether polyols include polyethylene glycols, polypropylene glycols and polytetraethylene glycols.

Suitable polycarbonate polyols which may be used include the reaction products of diols such as 1,3-propanediol, 1,4-butanediol, 1,6-hexanediol, diethylene glycol, triethylene glycol or tetraethylene glycol with phosgene, with diarylcarbonates such as diphenylcarbonate or with cyclic carbonates such as ethylene and/or propylene carbonate.

Suitable polyacetal polyols which may be used include those prepared by reacting glycols such as diethyleneglycol with formaldehyde. Suitable polyacetals may also be prepared by polymerizing cyclic acetals.

The active hydrogen-containing chain extender which may optionally be used is suitably an aliphatic, alicyclic, aromatic or heterocyclic primary or secondary polyamine having up to 80, preferably up to 12 carbon atoms, or water. In the latter case, a fully reacted polyurethane polymer is obtained with no residual free isocyanate groups.

Where the chain extension of the polyurethane prepolymer=is effected with a polyamine, the total amount of polyamine should be calculated according to the amount of isocyanate groups present in the polyurethane .prepolymer in order to obtain a fully reacted polyurethane urea polymer with no residual free isocyanate groups; the polyamine used in this case has an average functionality of 2 to 4, preferably 2 to 3.

The degree of non-linearity of polyurethane urea polymers controlled by the functionality of the polyamine used for the chain extension. The desired functionality can be achieved by mixing polyamines with different amine functionalities. For example, a functionality of 2.5 may be achieved by using equimolar mixtures of diamines and triamines.

Examples of such chain extenders useful herein include hydrazine, ethylene diamine, piperazine, diethylene triamine, triethylene tetramine, tetraethylene pentamine, pentaethylene hexamine, N, N, N-tris(2-aminoethyl)amine; N--(2--piperazinoethyl)ethylenediamine, N,N'-bis(2-aminoethyl) piperazine, N,N,N'-tris(2-aminoethyl)ethylenediamine, N-[N-(2-aminoethyl)-2-aminoethyl-N'-(2-aminoethyl)piperazine, N-(2-aminoethyl)-N'-(2piperazinoethyl)ethylene diamine, N,N-bis(2-aminoethyl)-N-(2-piperazinoethyl)amine, N,N-bis(2piperazinoethyl)amine, guanidine, melamine,N-(2-aminoethyl) -1, 3-propanediamine, 3,3"- diaminobenzidine, 2,4,6-triaminopyrimidine, dipropylenetriamine, tetrapropylenepentamine, tripropylenetetramine, N,N-bis(6-aminohexyl)amine, N,N'-bis(3-aminopropyl)ethyienediamine, 2 ,4-bis(4'-aminobenzyl)aniline, 1,4-butanediamine, 1, 6-hexanediamine, 1,8-octanediarnine,1,1 0-decanediamine, 2-methylpentamethylenediamine,1,12 -dodecanediamine, isophorone diamine (or1 -amino-3-aminomethyl-3'5 ,5-trimethyl-cyclohexane), bis(4aminocyclohexyl)methane(or bis(aminocyclohexane-4-yl).methane( and bis(4-amino-3methylcyclohexyl)methane(or bis(amino-2-methylcyclohexane-4-yl)methane, polyethylene imines, polyoxyethylene amines and/orpolyoxypropylene amines (e.g. Jeffamines from TEXACO).

The total amount of polyamines should be calculated according to the amount of isocyanate groups present in the polyurethane prepolymer. The ratio of isocyanate groups in the prepolymer to active hydrogen in the chain extender during the chain extension is in the range of from about 1.0:0.7 to about 1.0:1.1, preferably from about 1.0:0.9 to about 1.0:1.02 on an equivalent basis.

Preferably, the polyisocyanate is a diisocyanate and more preferably it is selected from 1,1'methylenebis-[4-isocyanatobenzene] and 1,1'-methylenebis [4-isocyanatocyclohexane].

Preferably the polyol is a polyethylene glycol selected from ethylene glycol, polyethylene glycol, polytetramethylene glycol and the like, eventually in admixture with other polyether polyols.

Even more preferably, the polyethylene glycol has a very low molecular weight (from 300 to 900). This is rather unconventional as usually the polyurethanes incorporate polyethylene glycol with a molecular weight above 2000 in order to achieve the well known properties of the polyurethanes (long soft and hard segments, melting point, strength). Breathability is also known to decrease with the molecular weight of the polyethylene glycol. However, in this embodiment, the low molecular weight of the polyethylene glycol is supposed to be responsible for the amelioration of the flux.

Preferably the chain extender is isophorone diamine (or I-amino-3-aminomethyl-3,5,5,trimethylcyclohexane) alone or in admixture with hydrazine.

The reflective matter in the coating layer is preferably a dispersion of a pigment, such as a metal pigment or a pigment which includes a reflective metallic surface. A wide range of metals may be used including, but not confined to, aluminium, bronze, stainless steel, brass, gold, nickel, silver, tin, copper or mixtures thereof. Alternatively mineral pigments such as glass or mica coated with reflective metal surfaces may be used. The reflective matter is preferably in a flake or platelet form.

The emissivity of the low emissivity layer for any particular reflective matter and coating is primarily dependent upon two variables: the amount of reflective matter present in the coating; and the thickness of the coating. Higher levels of reflective matter will give lower emissivities but increased cost, and above critical addition levels the matter may be insufficiently bound within the coating matrix. Expressing the amount of reflective matter or pigment as a pigment to binder ratio, the pigment: binder ratio may be in the range from 3:1 to 1:10. The term "binder" is used to mean the dry or solvent-less polymer matrix forming the coating within which the pigment is dispersed. Coatings having lower pigment to binder ratios may still provide suitable low emissivity surfaces by increasing the coating layer weight per unit area which may preferably range from 0.8 g/m² to 2.5 g/m².

There is also contemplated herein a laminated insulation material for use in, or when used in, building and/or construction, and including a moisture vapour permeable, liquid water impermeable substrate layer bearing an overlying moisture vapour permeable, liquid water impermeable, reflective coating layer, the substrate layer being laminated to a support layer and the product components being predominantly derived from sustainable or renewable materials.

Such sustainable or renewable materials are those derived predominantly from natural biological materials.

By means of this embodiment of the invention, the components of the reflective laminate which are derived from minerals, mineral oil or gas comprise a small minority of the laminated insulation material. Preferably, only less than 10.4% by weight of the insulation material may be material derived from minerals, mineral oil or gas, more preferably less than 1% by weight. The invention thus provides an improved reflective, air and liquid water impermeable, moisture vapour permeable insulation material, in particular a laminated insulation material for use in the building or construction industries, in which the reliance on components derived from mineral oil or gas is at least substantially reduced.

There is also contemplated herein a substantially planar, self-supporting layer of a sheet or film for use as, or when used as, an insulation material, including a substrate film layer bearing an overlying substantially continuous adherent thin coating layer comprising a block copolymer encapsulating a particulate, preferably metal or metal-coated, pigment or infrared reflective matter providing an emissivity on the coated surface of the substrate film layer less than 0.5, the reflective coated substrate film layer having a moisture vapour permeability greater than 1000 g/m²/day, the substrate film layer being preferably laminated to a support layer.

Further, wherever appropriate, the advantages and preferred features of the first aspect of the invention apply mutatis mutandis to such a sheet or film. Thus, for example, the same block copolymer, substrate and pigment materials may be selected.

The invention comprehends use of any of the reflective coated substrate film layers defined herein in the building and construction industries in general and in a building in particular. However, the reflective, air and liquid water impermeable, moisture vapour permeable membrane formed by the reflective coated substrate film layer of the invention is not suitable for use in many building or construction industry applications as an unsupported layer. The membrane may have adequate tensile strength for use in construction industry applications but will typically have poor tear strength.

Single films, whether formed by melt processes such as blowing or casting or by extrusion and regeneration from solutions, exhibit directional orientation at the molecular level. This molecular orientation is the main factor contributing to directionality in the physical properties of the film so that when considering tensile strength, for example, machine direction values frequently exceed those measured in the cross direction of the material as formed. Conversely, tear strengths are frequently lower when measured in the machine direction than in the cross direction so that any tear initiated in the film tends to orient itself along the weakest orientation and requires only low forces to propagate. Tear strength is important in building construction since such sheet materials are frequently fixed in position for use by nails or staples so that the puncture holes act as initiation points for tearing.

In order more readily to meet the strength requirements of the building and construction industries, the substrate film layers of the insulation materials described herein is ideally laminated to one or more a strong support layers, i.e. a support layer having a strength which is greater than that of the substrate layer.

In order to facilitate preservation of the moisture vapour permeability of the substrate layer and not damage the coating layer, the support layer may advantageously be laminated to the substrate layer by intermittent adhesive bonding.

Resulting supported/laminated insulation material of the invention is, for example, particularly suitable for use in or as: roofing insulation or a roofing underlay in a building; wall insulation in a building; and/or floor insulation in a building. Thus the invention also specifically extends to such uses of the insulation material and buildings incorporating them.

The support layer may advantageously take the form of a non-woven fabric such as a polypropylene spunbond. Where sustainable materials are desired, the non-woven fabric may for example be needled wool non-woven or wool felt, such as a lightly needled wool fleece.

The insulation materials described herein may advantageously form part of a multi-layer insulation product. Thus the invention extends to a multi-layer insulation product having oppositely facing side edges and including a plurality of inner air and water vapour permeable insulating wadding layers and at least one inner reflective layer separating two said wadding layers, the inner layers being sandwiched between first and second outer layers of supported insulating material as described herein.

The inner reflective layer(s) may preferably comprise any insulation material of the invention described herein.

Preferably, to avoid thermal bridging, the first and second outer layers may be held together along the oppositely facing side edges without there being any perforations or punctures between the oppositely facing side edges of the insulation product.

The invention also extends to a multi-layer insulation product having outer layers of laminated insulation material as described herein laminated to a nonwoven fabric support layer by welding along long or machine direction edges, the welded outer layers enclosing an insulation core including alternating layers of insulation material as described herein which includes respective wadding layers acting to maintain a space between the reflective substrate layers of the insulation materials.

To enhance insulation properties, the space between the reflective substrate layers of the insulation materials in the multi-layer insulation products may be at least 5 mm.

The multi-layer insulation products formed with the insulation materials of the invention are, for example, particularly suitable for use in or as: roofing insulation or a roofing underlay in a building; wall insulation in a building; and/or floor insulation in a building. Thus the invention also specifically extends to such uses of the insulation products, and buildings incorporating them.

In order that the invention may be more readily understood, reference will now be made, by way of example, to the accompanying drawings, in which:-
Figure 1 is a cross-section of a laminated insulation material constructed in accordance with the invention;
Figure 2 is a cross-section of a test apparatus for measuring the thermal conductivity of multi-foil insulation without and including the laminated insulation material of Figure 1, together with associated unventilated air cavities;
Figure 3 is a perspective view from the front of a cavity wall frame structure of a building and incorporating the laminated insulation material of Figure 1 in a wall membrane; and
Figure 4 is a diagrammatic side view of a multi-layer insulation product having outer layers formed by the laminated insulation material of Figure 1.

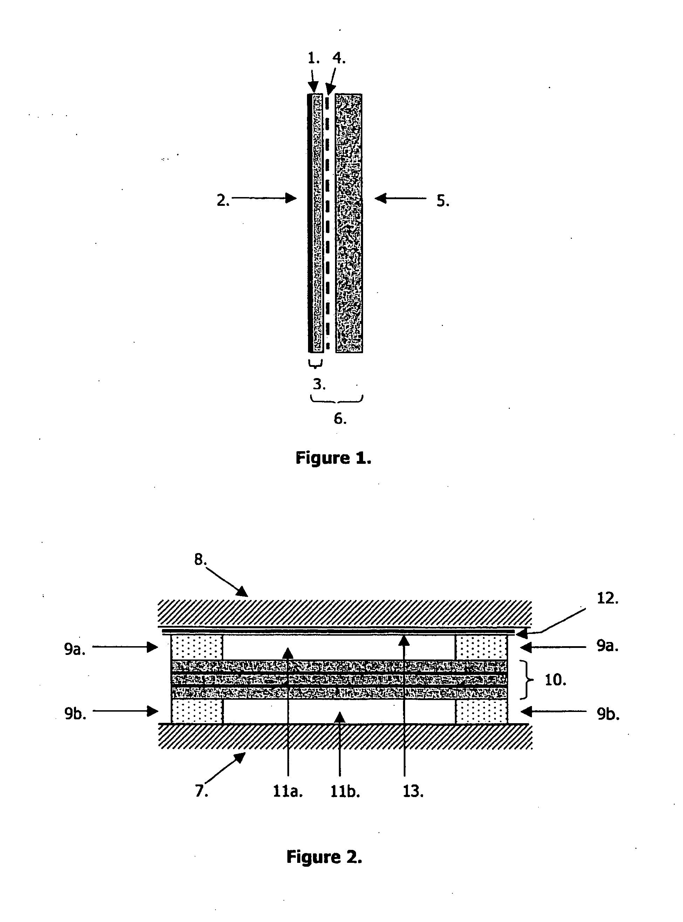

Referring to Figure 1, there is shown an air and liquid water impermeable, moisture vapour permeable monolithic, dimensionally stable membrane constituting a substrate film layer 1 which forms the substrate for, and bears, an overlying adherent thin reflective or low emissivity coating layer 2 containing a dispersion of an infrared reflective pigment (not visible) dispersed within the coating layer 2. The two component layers 1 and 2 combined form a moisture vapour permeable reflective coated substrate film layer 3. An intermittent adhesive 4 attaches the membrane constituting a moisture vapour permeable reflective coated film substrate layer 3 to a strong support layer 5 to form a laminated insulation material 6.

The invention will now be further explained by reference to the following Examples 1 to 4.

In these examples, emissivity has been measured to ASTM C1371-98 using a model AE Emissometer manufactured and supplied by Devices and Services Company, Dallas, Texas, U.S.A., calibrated using the low and high emissivity standards provided by the test equipment supplier and measured with the reflective coated side of the test sample facing the radiation source. All emissivity values (e) herein are given at a temperature of 25 C.

Moisture vapour permeability or moisture vapour transmission rate (MVTR) was measured using a Lyssy Model L80-5000 Water Vapor Permeability Tester at 100%/15% RH, i.e. 85% RH difference and 23 C.

### EXAMPLE 1 - Membrane component (reflective coated substrate film layer) only

A membrane component was prepared using a 35 µm thick regenerated cellulose film (Cellophane™ film by Innovia Films Limited). This was gravure coated with a 0.9 g/m² polyurethane block copolymer coating comprising hard and soft segments (in this case the reaction product of (a) a polyisocyanate; and (b) polyols containing at least two isocyanate reactive groups) containing a reflective aluminium pigment, Mirato TF4679, at a pigment to binder ratio of 1:1. The emissivity, ε, of the reflective coated surface of the reflective membrane was 0.42 and the MVTR was 1444 g/m²/24 hours.

### EXAMPLE 2 - Membrane component + support layer component

The same gauge of regenerated cellulose film was coated using the same materials and the same pigment to binder ratio of 1:1 but with the coating layer weight increased to 2.2 g/m². The reflective film was then laminated using rotary gravure hot melt adhesive technology to a 50 g/m² basis weight polypropylene spunbonded nonwoven fabric as the support layer with the non-coated side of the membrane contacting the support layer. The adhesive coat weight was approximately 10 g/m² using an intermittent dot pattern to maintain the moisture vapour permeability of the laminate. The finished laminated insulation material therefore presented two opposing surfaces, one comprising the 50 g/m² polypropylene spunbonded fabric, the other comprising the reflective coating layer. The finished laminated insulation material (laminate) showed a reduced ε of 0.25 and the MVTR was 1198 g/m²/24 hr. Thus the increase in coating weight, keeping other coating factors constant, gave a beneficial decrease in emissivity. Adhesive lamination of the coated film to the support layer produced only a modest apparent decrease in moisture vapour permeability.

### EXAMPLE 3 - Membrane component + support layer component

Using the same materials, the pigment binder ratio was changed to 1.5:1 using the same coating layer weight as in Example 2. In other words the content of reflective pigment in the coating was increased compared to Example 2 keeping other materials and conditions the same. The reflective membrane was laminated as before to a 50 g/m² basis weight polypropylene spunbonded fabric. The laminated insulation material (laminate) had an emissivity of 0.20 and an MVTR of 1037 g/m²/24 hr. Thus, increasing the reflective pigment content had a significant beneficial effect on the emissivity.

It will be understood that the differences in observed MVTR values will be a function not only of the weight of the reflective coating layer but also of normal process variations in the weight or disposition of the adhesive used to laminate the component layers.

The tensile strength, elongation and tear values of the Examples 2 and 3 were determined primarily by the polypropylene spunbonded fabric support layer and were very similar irrespective of the nature of the reflective coating layer. Typical values for the samples are given in Table 1:

| **Table 1: Typical physical values for laminates of Examples 2 & 3** | | | | | | | | |
|---|---|---|---|---|---|---|---|---|
| | **Basis Weight** | **Tensile Strength** | | **Elongation at peak** | | **Trapezoid tear strength** | | **MVTR** |
| | | **MD** | **CD** | **MD** | **CD** | **MD** | **CD** | |
| | **G** | **N** | **N** | **%** | **%** | **N** | **N** | **g/m²/24hr** |
| Typical values | 93 | 182 | 104 | 19 | 34 | 53 | 66 | 1118 |
| **Test information** | | | | | | | | |
| Basis weight: BS EN 1849-2:2001. | | | | | | | | |
| Tensile strength and elongation values: ISO 9073-3:89. | | | | | | | | |
| Trapezoid tear strengths: ISO 9073-4:89. | | | | | | | | |
| MVTR: 23°C, 100%/15% RH, Lyssy Model L80-5000 Water Vapor Permeability Tester | | | | | | | | |

### EXAMPLE 4 - Membrane component + support layer component

In a fourth example a reflective film prepared as in Example 3 was laminated using rotary gravure hot melt adhesive technology to a 100 g/m² polypropylene spunbonded nonwoven fabric as the support layer with the non-coated side of the membrane contacting the support layer. The adhesive coat weight was approximately 18 g/m² using an intermittent dot pattern to maintain the moisture vapour permeability of the laminate. The finished laminate therefore presented two opposing surfaces, one comprising the 100 g/m² polypropylene spunbonded fabric, the other comprising the reflective coating.

A comparison of the properties of the unlaminated reflective coated substrate film layer component and of the adhesively laminated insulation material is given in Table 2.

| **Table 2: Comparison of reflective coated substrate film layer and laminate properties** | | | | | | | | | |
|---|---|---|---|---|---|---|---|---|---|
| | **Basis Weight** | **Tensile Strength** | | **Elongation at peak** | | **Trapezoid tear strength** | | **MVTR** | **Emissivity** |
| | | **MD** | **CD** | **MD** | **CD** | **MD** | **CD** | | |
| | **G** | **N** | **N** | **N** | **N** | **N** | **N** | **g/m²/24hr** | **E** |
| Reflective film layer | 34 | 100 | 57 | 6 | 17 | 0.46 | 0.62 | 1752 | 0.18 |
| Reflective laminate | 152 | 220 | 125 | 44 | 50 | 94 | 88 | 1276 | 0.18 |
| **Test information** | | | | | | | | | |
| Basis weight: BS EN 1849-2:2001. | | | | | | | | | |
| Tensile strength and elongation values: ISO 9073-3:89. | | | | | | | | | |
| Trapezoid tear strengths: ISO 9073-4:89. | | | | | | | | | |
| MVTR: 23°C, 100%/15% RH, Lyssy Model L80-5000 Water Vapor Permeability Tester | | | | | | | | | |
| Emissivity: ASTM C1371-98 using a model AE Emissometer | | | | | | | | | |

Thus it can be seen that although the reflective coated substrate film layer component prior to lamination has a useable tensile strength, its tear strengths are very low indeed precluding its application as a product by itself for many purposes. The physical strengths of the laminate are of course greatly improved especially in relation to tear strength whilst the moisture vapour permeability and emissivity are still excellent.

### Examples of uses

### Outer layers of multi-foil insulation

The laminated insulation materials of the invention described in Examples 2 and 3 are particularly suitable for use as the outer layers of a multi-foil reflective insulation material. Such multi-foil insulation materials are the subject of the applicant's patent application WO 2006/043092 A1 which discloses a thermal insulation structure comprising a plurality of inner water vapour permeable, air impermeable, reflective film layers alternating with a plurality of inner air and water vapour permeable insulating spacer layers which entrap air and separate the reflective layers. The inner layers are sandwiched between outer layers which are moisture vapour permeable, air impermeable layers having low emissivity outer surfaces. The whole multi-foil structure acts as a thermal insulation product limiting heat loss by obviating or minimising air leakage in addition to reducing heat transfer by conduction, convection and radiation, including the thermal benefit of the unventilated air spaces adjacent to the outer low emissivity surfaces whilst allowing excess moisture vapour to escape through it.

While the laminates of Examples 2 and 3 could find use as the inner reflective layers of the multi-foil insulation it would be economically advantageous for this particular application if the reflective membrane were laminated to a lower cost, lighter weight substrate. In the structure of a multi-foil insulation product, it is the outer layers which are required to have the strength to withstand being held in position by nails or staples. The inner reflective layers contribute little or nothing to this and so the use of lighter weight laminates as inner layers is appropriate. A spunbonded nonwoven fabric with a basis weight less than 20 g/m² would be an example of a suitable lightweight support layer although a wide range of lightweight materials would be suitable including, without limit, carded nonwoven fabrics, woven or knitted fabrics, nets or scrims, apertured films and papers. An alternative approach would be to laminate the reflective membrane component of the invention directly to the wadding, foam or other material used to form the air permeable layers separating the reflective membrane layers in the insulation structure disclosed in WO 2006/043092 A1. In this case the laminated insulation material (laminate) of this invention comprises the reflective membrane component plus the air permeable spacing or separating layer which then also acts as the support layer.

An example of a low emissivity, air and liquid water impermeable, moisture vapour permeable insulation product made using both inner and outer layers of this invention is described in Table 3 below with a moisture impermeable multi-foil insulation according to the prior art, formerly sold under the trade mark Thinsulex™ by Web Dynamics Limited, for comparison.

| **Table 3: Physical data of multi-foil insulation products** | | |
|---|---|---|
| | **Prior art impermeable multi-foil insulation** | **Multi-foil insulation product made using reflective layers of this invention** |
| Emissivity of outer layers | 0.4 | 0.22 |
| Typical moisture vapour permeability of one inner layer, g.m⁻2/24hr | <1 | 1600 |
| Number of PET wadding layers | 5 | 5 |
| Number of inner reflective layers | 4 | 4 |
| Emissivity of inner reflective layers | 0.05 | 0.22 |
| Total thickness of insulation, mm | 30 | 30 |
| Basis weight of insulation, gm⁻² | 698 | 720 |
| Thermal conductivity, W/mK (including 2 x 25mm air cavities) | 0.0545 | 0.0533 |

Laminated insulation materials (laminates) of the invention may also be used as reflective or low emissivity, air and liquid water impermeable, moisture vapour permeable roofing underlays. In this application a strong support layer is required both to withstand the handling required during installation and the forces exerted upon it over a long period once installed. Roofing underlays may be subject to strong wind uplift forces, for example, where low elongation values under tensile stress are an advantage. Spunbonded polypropylene nonwoven fabrics are commonly used as the main components providing mechanical strength to commercially available synthetic roofing underlays. A polypropylene spunbonded fabric or spunbonded fabric layers giving a basis weight either singly or combined of at least 80 g/m², preferably ≥100 g/m², would be particularly suitable for support layers of the invention for this application.

Thus Example 4 is an example of structure which would be suitable for use as a low emissivity, air and liquid water impermeable, moisture vapour permeable roofing underlay. Such support substrates may advantageously contain additives such as pigments, extenders, flame retardants, heat and UV-stabilisers, and surface modifiers such as hydrophilic or hydrophobic additives, used either singly or in combination. Such a low emissivity roofing underlay is particularly advantageous when used in combination with a low emissivity insulation product, examples of which include multi-foil insulation products or rigid foamed board insulation panels having low emissivity outer surfaces. The reflective roofing underlay is advantageously arranged so that an unventilated air cavity is formed bounded by two low emissivity surfaces, one the low emissivity surface of the roofing underlay, the other of the insulation.

The advantage of a low emissivity roofing underlay in accordance with the invention has been demonstrated by measuring the thermal conductance of a the prior art multi-foil insulation product of Table 3 positioned between two expanded polystyrene spacing frames to provide two unventilated air cavities, one above and one below the multi-foil insulation. The thermal conductance of the same multi-foil insulation may then be re-measured but with a low emissivity roofing underlay inserted above the upper air cavity.

Referring to Figure 2, a test apparatus consists of a heated lower test plate, 7 and an upper test plate 8 which contains thermocouples so that the heat flux from the surface of test plate 7 to the surface of the upper plate 8 can be measured. The test apparatus is normally used according to test method BS EN 12667:2001 with the two test plates, 7 and 8, in direct contact with the insulation sample under test. However, to take into account the low emissivity surfaces of the insulation materials relevant here, including the low emissivity roof underlay constructed in accordance with this invention, the test method was adapted so that the prior art multi-foil insulation product 10 was positioned between two expanded polystyrene spacer rings 9a and 9b to form unventilated cavities 11 a and 11 b above and below the multi-foil insulation. The spacer rings 9a and 9b were 25mm thick therefore forming 25mm thick unventilated air cavities 11 a and 11b. With this arrangement the thermal conductivity of the prior art multi-foil insulation 10 together with the unventilated air cavities 11 a and 11 b was measured. The experiment was then repeated but with a roofing underlay 12 of this invention positioned between the upper spacer ring 9a and the upper test plate 8 so that its low emissivity surface 13 faced into the cavity 11a. The test results are given in Table 4.

| **Table 4: Effect of low emissivity roof underlay on thermal insulation properties** | | | |
|---|---|---|---|
| **Test materials** | **Thickness, mm (incl. cavities)** | **Conductivity, λ W/mK** | **Thermal resistance, R m²K/W** |
| Prior art multi-foil insulation product | 78 | 0.0545 | 1.43 |
| Prior art multi-foil insulation product + Low emissivity roofing underlay | 78 | 0.04447 | 1.75 |
| Note 1: prior art multi-foil insulation product = Impermeable multi-foil insulation, 30mm thick, ε (outer surfaces) = 0.4 | | | |
| Note 2: Low emissivity roofing underlay = moisture vapour permeable, coated film prepared as in Example 3 + 50g/m² polypropylene spunbonded nonwoven fabric support layer, ε (side towards cavity) = 0.22 | | | |

Table 4 therefore shows the effect of changing the emissivity of the upper boundary surface of a 25mm thick, unventilated air cavity from >0.8 to 0.22 with the lower boundary surface of the air cavity being formed by one of the outer surfaces of a standard multi-foil insulation product. The thermal resistance of the whole insulation structure, multi-foil insulation plus unventilated air cavities is thus improved by the additional use of a single, low emissivity roof underlay having a thickness of only 0.4mm.

Air leakage is an important factor in energy loss in buildings and a roofing underlay can contribute significantly to a reduction in air leakage. The air permeability of the laminated reflective insulation material (laminate) of Example 3 is compared in Table 5 to those of two commercially available moisture vapour permeable reflective products: an aluminised microporous product manufactured and marketed by Du Pont under the trade mark Tyvek® Reflex® and a micro-perforated wall breather membrane manufactured under the trade mark Daltex Reflectashield™ by Don & Low Limited.

| **Table 5: Comparison of air permeability** | | | |
|---|---|---|---|
| | **Product type** | **Air Permeability, mm.s⁻¹** | **N** |
| Reflective laminate of this invention | Coated non-porous film laminate | Zero | 10 |
| Tyvek Reflex | Coated microporous nonwoven | 0.3 | 10 |
| Daltex Reflectashield | Micro-perforated film laminate | 19.3 | 10 |
| **Test information:** | | | |
| BS EN ISO 9237:1995 Test area = 5.0 cm² Pressure drop = 200 Pa | | | |

Since laminates made using the reflective coated film substrate of this invention have zero air permeability, building products such as insulation products and roof underlays made in accordance with this invention can provide a significant contribution to the reduction in air leakage of the building in which they are installed especially if overlaps are battened or taped with an adhesive tape along their length.

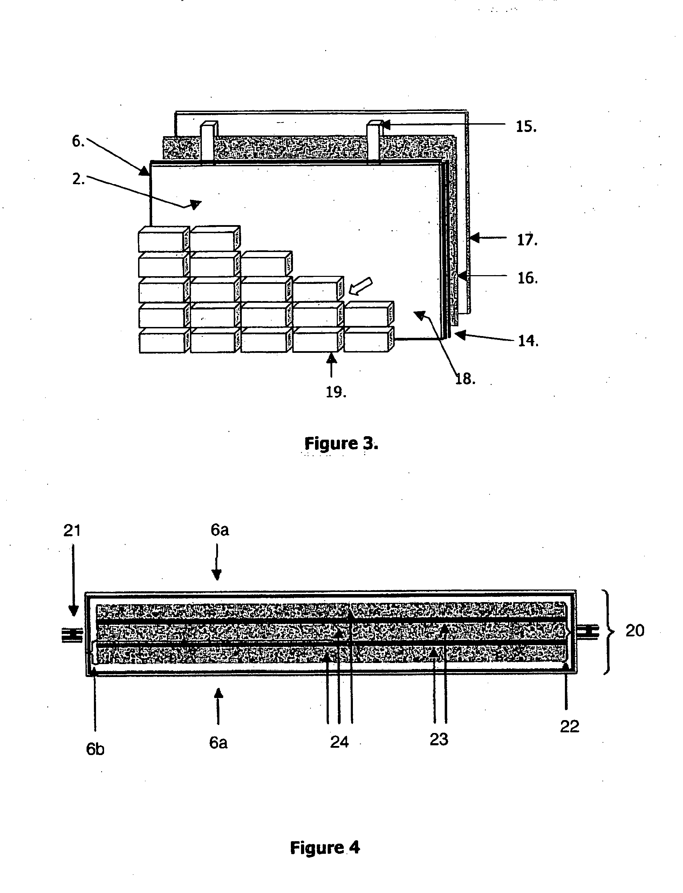

The structure described for use as a low emissivity, air and liquid water impermeable, moisture vapour permeable roofing underlay may also be suitable for use in walls as a component variously and interchangeably described as a wall membrane, breather membrane, wall breather membrane or house-wrap and here referred to as a wall membrane. Such membranes are attached to the inner frame structure adjacent to the air cavity between the frame structure and the outer component wall. The frame may be of timber or timber-based components such as oriented strip board for example, but might be of steel. Such a frame structure, showing the location of the wall membrane, is illustrated in Figure 3 by way of explanation. The low emissivity wall membrane of this invention, 6, provides protection for the frame structure consisting of the sheathing board, which may be, for example, oriented strand board, 14, and the studs, 15, between which is placed insulation material 16, located between the sheathing board 14 and plasterboard 17.

Such protection is especially important during construction before the outer wall, 19, is in place. It also protects the frame structure from the effects of any moisture which may condense in the cold air cavity, 18. The low emissivity surface, 2, facing into the cavity, 18, increases the thermal resistance of the air layer in the cavity. This advantage is well understood and is described, for example, in Patent Applications EP 1 331 316 A1 assigned to Thermal Economics, WO 2006/024013 A1 assigned to Du Pont and GB 2 388 815 B assigned to Don & Low Ltd discussed earlier. However, the low emissivity wall membrane of this invention has the advantage of significantly higher moisture vapour permeability combined with very high liquid water resistance than prior art products. This is illustrated in Table 6 in which a coated low-emissivity film of this invention (made according to Example 4) has been compared to a commercially available micro-perforated film laminate sold as a wall membrane under the trade mark Daltex Reflectashield™ and manufactured by Don & Low Limited and to an aluminised microporous product marketed under the trade mark Tyvek® Reflex® and manufactured by Du Pont.

| **Table 6. Comparison of breathable, low emissivity laminates** | | | |
|---|---|---|---|
| | **Reflectashield® (Micro-perforated)** | **Tyvek® Reflex® (Microporous)** | **Coated laminate of this invention (Example 4)** |
| Basis weight, g/m² | 120 | 85 | 152 |
| Moisture vapour permeability (MVTR), g/m²/24hr | 578 | 593 | 1276 |
| Emissivity | 0.21 | 0.19 | 0.18 |
| Hydrostatic head, cm H₂O | 34 average | 210 average | >500 |
| | 33 minimum | 185 minimum | >500 |
| **Test information** | | | |
| Basis weight: Nominal quoted values for Reflectashield® and Tyvek® Reflex®, confirmed by measuring average of 10 samples to BS EN 1849-2:2001. | | | |
| MVTR: 23°C, 100%/15% RH, Lyssy Model | | | |
| Emissivity: ASTM C1371-98, using a model AE Emissometer. | | | |
| Hydrostatic head: BS EN 20811:92 at 60cm/min taking the endpoint as the first breakthrough. Average of three tests. Laminate of this invention did not show any signs of water breakthrough at a hydrostatic head of 500cm when the test was stopped. | | | |

Thus, the data presented in Table 6 shows that the laminate of this invention is considerably superior to the microperforated and microporous products in respect of moisture vapour permeability and hydrostatic head whilst having a very similar emissivity.

The reflective membrane component of this invention may alternatively be laminated directly to a rigid component of a building, for example to the sheathing board of a frame construction building. In this case, the rigid component, for example oriented strip board (OSB) sheathing, is the support layer of the laminate of this invention. This would only be practical for application in a factory environment where frame sections, complete with their wall membrane and optionally with insulation, are manufactured as ready-to-assemble units since the reflective membrane component is insufficiently robust to withstand the rigors of on-site application.

The Applicant's UK Patent Application published as GB 2436338 discloses how infrared reflective structures, alternatively described as low emissivity structures, can increase the thermal insulation of buildings by ensuring that unventilated air spaces are bounded by at least three such low emissivity surfaces. It describes the relationship between the thermal resistance of the unventilated air space and the emissivity of the surfaces adjacent to the air spaces. The low emissivity layers may be arranged to bound one or more unventilated air cavities without the requirement for waddings or other "spacer" or separation layers between the low emissivity layers taking advantage of the very low thermal conductivity value of air, 0.025 W/mK. Laminates of this invention would be suitable for use as low emissivity layers for the invention described in GB 2436338 especially in the configuration described as particularly advantageous when both opposing surfaces bounding the air cavity are low emissivity so that one surface will reflect incident radiation whilst the opposing surface will absorb very little incident radiation.

The reflective membrane component (reflective coated film substrate) of this invention is preferably regenerated cellulose and coated, as described, with a thin reflective coating layer. The coating layer of this invention may be synthetic in the sense that it may be derived from oil or mineral-based raw materials whilst the regenerated cellulose which forms the substrate layer is derived from renewable vegetable sources, usually trees. Since oil and minerals are finite resources they are regarded as non-renewable. As they become increasingly scarce, prices will increase and their conservation becomes increasingly important. The use of materials based on natural or renewable raw materials is therefore an advantage and contributes to the reduction in the use of non-renewable materials. If the coating layer is based on synthetic, non-renewable materials, expressing the upper limit of the preferred coating layer weight of this invention, 2.5g/m², as a percentage of the lowest substrate weight gives the maximum percentage of non-renewable content for the reflective membrane component of this invention. The lowest preferred thickness of the film substrate of this invention is 15µm. At a density of 1.44 (the density of regenerated cellulose) the substrate basis weight is 21.6g/m². Hence the maximum percentage of non-renewable based material in preferred reflective membrane components of this invention is (2.5 x 100)/(21.6+2.5) = 10.4% by weight. A similar calculation based on a specific structure, a 0.8g/m2 coating weight on a 20µm regenerated cellulose film gives a non-renewable content of only 2.7%. If the support layer of the insulating material of this invention is also based on renewable raw materials then the percentage of non-renewable material in the laminate of this invention may be extremely low i.e. considerably lower than 1% by weight.

Support layers of this type may be based on wool, cotton, flax, jute, or similar textile fibres or may themselves be based on regenerated cellulose for example, viscose fibres, or may be mixtures of such fibres. The support layer may be in the form of traditional textiles for example woven or knitted fabrics, or may be in the form of nonwoven fabrics including those formed by hydroentanglement, carding and latex bonding technology, needling, latex spray bonding or similar methods of consolidating fibrous webs known in the art used singly or in combination. Support layers comprising predominantly renewable raw material fibres may be combined with a minority of synthetic fibres including bicomponent fibres. The latter may be used to consolidate the fabric by thermally bonding the predominantly renewable fibre web. Alternatively the support layer may be a paper or a wet-laid nonwoven or a material comprising predominantly short length fibres reinforced by longer textile fibres. A paper reinforced by viscose fibres would be an example of such a material.

By using a coated regenerated cellulose film laminated to a renewable support layer i.e. a support layer comprised wholly or predominantly of fibres which are renewable or derived from renewable materials, multi-layer insulation products, roofing underlays, wall membranes and other reflective building insulation products of this invention may be made which are wholly or predominantly based on renewable materials.

An example of such a multi-layer insulation product based predominantly on renewable materials is given in Figure 4 to which reference will now be made.

A multi-layer insulation material constituted by a product 20 includes outer layers of the laminated insulation material of this invention 6a comprising a reflective membrane component (reflective coated film substrate such as 3 in Figure 1) laminated to a needled wool nonwoven or wool felt support layer welded along the long or machine direction edges as indicated at 21, as by ultrasonic bonding for example. The welded outer layers 6a enclose an insulation core 22 comprising alternating layers of laminates 6b of this invention in which a reflective membrane component 23 is laminated to a lightly needled wool fleece or wadding 24 which acts to maintain a space of at least 5mm between the reflective membrane components 23 or 6a. An insulation core 22, comprises three layers of laminate 6b. However, it will be appreciated that the number of such layers 6b may vary according to the insulation performance and application required.

## Claims

1. An insulation material for use in, or when used in, building and/or construction, including an air impermeable, monolithic, dimensionally stable substrate layer bearing an overlying low-emissivity layer having an emissivity of less than 0.5, the substrate layer and the low-emissivity layer being liquid water impermeable and moisture vapour permeable, **characterised in that** the low emissivity layer is applied to the substrate layer as a thin organic coating containing a dispersion of infrared reflective matter.

2. The insulation material of claim 1, wherein the substrate layer and the low-emissivity layer have a moisture vapour permeability greater than 360 g/m²/day, and wherein the weight of the organic coating lies in the range from 0.8 g/m² to 2.5 g/m².

3. An insulation material as claimed in claim 1 or claim 2, wherein the substrate layer is made of cellulose, a cellulose derivative or regenerated cellulose and has a thickness in the range from 15 µm to 350 µm.

4. An insulation material as claimed in any of claims 1 to 3, wherein the coating comprises any one or more of cellulose derivatives, synthetic organic polymers, naturally occurring polymers and their derivatives.

5. An insulation material as claimed in claim 4, wherein the coating comprises one of the following: cellulose ethers, esters and nitrocellulose, polyacrylic esters, polyvinyl acetate copolymers, polyurethanes, polyamides, polysulfones and polyvinyl alcohol copolymers, starches, chitin, fructan, lignin, gums and proteins and their derivatives.

6. An insulation material as claimed in any of claims 1 to 5, wherein the coating comprises a block copolymer.

7. An insulation material as claimed in claim 6, wherein the block copolymer is selected from materials which allow high transfer of moisture vapour by molecular diffusion and have polymer chains comprising high and low crystallinity sections.

8. An insulation material as claimed in claim 6 or claim 7, wherein the block copolymer is selected from any one or more of styrene butadiene resins and hydrophilic polyurethanes including polyester urethanes, polyether urethanes, polycarbonate urethanes and polyurethane urea polymers.

9. An insulation material as claimed in any of claims 1 to 8, wherein the reflective matter in the coating comprises a dispersion of a metal pigment or a pigment that presents a reflective metallic surface.

10. An insulation material as claimed in any of claims 1 to 5, being predominantly derived from sustainable or renewable raw materials.

11. An insulation material as claimed in any of claims 1 to 10, wherein the support layer is laminated by intermittent adhesive bonding to a nonwoven fabric support layer having a strength which is greater than that of the substrate layer.

12. A multi-layer insulation product having oppositely facing side edges and including a plurality of inner air and water vapour permeable insulating wadding layers and at least one inner reflective layer separating two said wadding layers, the inner layers being sandwiched between first and second outer layers of the insulating material of claim 11.

13. A multi-layer insulation product as claimed in claim 12, wherein at least one inner reflective layer comprises an insulation material according to any of claims 1 to 12.

14. A building incorporating an insulation material or product as claimed in any of claims 1 to 13.

15. Use of a insulation material or product as claimed in any of claims 11 to 14 in or as roofing insulation or a roofing underlay in a building; in or as wall insulation in a building, or in or as floor insulation in a building.

## Patentansprüche

1. Isoliermaterial zur Verwendung oder wenn verwendet im Bauwesen und/oder Konstruktion, mit einer luftundurchlässigen, monolithischen, formstabilen Substratschicht, welche eine darüber liegende Schicht mit geringem Emissionsgrad trägt, welcher weniger als 0,5 beträgt, wobei die Substratschicht und die Schicht mit geringem Emissionsgrad flüssigwasserundurchlässig und feuchtigkeitsdampfdurchlässig sind,
**dadurch gekennzeichnet, dass**
auf die Substratschicht die Schicht mit geringem Emissionsgrad als dünne organische Beschichtung aufgetragen wird, welche eine Dispersion eines Infrarot-reflektierenden Materials enthält.

2. Isoliermaterial nach Anspruch 1, wobei die Substratschicht und die Schicht mit geringem Emissionsgrad eine Feuchtigkeitsdampfdurchlässigkeit von mehr als 360 g/m²/Tag aufweisen, und wobei das Gewicht der organischen Beschichtung im Bereich von 0,8 g/m² bis 2,5 g/m² liegt.

3. Isoliermaterial nach Anspruch 1 oder Anspruch 2, wobei die Substratschicht aus Cellulose, einem Cellulosederivat oder regenerierter Cellulose hergestellt ist und eine Dicke im Bereich von 15 µm bis 350 µm aufweist.

4. Isoliermaterial nach einem der Ansprüche 1 bis 3, wobei die Beschichtung eines oder mehrere von Cellulosederivaten, synthetischen organischen Polymeren, natürlich vorkommenden Polymeren und deren Derivaten umfasst.

5. Isoliermaterial nach Anspruch 4, wobei die Beschichtung eines der folgenden umfasst: Celluloseether, -ester und Nitrocellulose, Polyacrylester, Polyvinylacetat-Copolymere, Polyurethane, Polyamide, Polysulfone und Polyvinylalkohol-Copolymere, Stärken, Chitin, Fruktane, Lignin, Gummis und Proteine sowie deren Derivate.

6. Isoliermaterial nach einem der Ansprüche 1 bis 5, wobei die Beschichtung ein Blockcopolymer umfasst.

7. Isoliermaterial nach Anspruch 6, wobei das Blockcopolymer ausgewählt ist aus Materialien, welche einen hohen Transfer von Feuchtigkeitsdampf mittels molekularer Diffusion ermöglichen und Polymerketten aufweisen, welche sowohl Abschnitte mit hoher als auch solche mit geringer Kristallinität umfassen.

8. Isoliermaterial nach Anspruch 6 oder Anspruch 7, wobei das Blockcopolymer ausgewählt ist aus einem oder mehreren von Styrol-Butadien-Harzen und hydrophilen Polyurethanen, einschließlich Polyesterurethanen, Polyetherurethanen, Polycarbonaturethanen und Polyurethan-Harnstoff-Polymeren.

9. Isoliermaterial nach einem der Ansprüche 1 bis 8, wobei das in der Beschichtung enthaltene reflektierende Material eine Dispersion eines Metallpigments oder eines Pigments umfasst, welches eine reflektierende metallische Oberfläche zeigt.

10. Isoliermaterial nach einem der Ansprüche 1 bis 5, welches vorwiegend aus nachwachsenden oder erneuerbaren Rohstoffen gewonnen ist.

11. Isoliermaterial nach einem der Ansprüche 1 bis 10, wobei die Trägerschicht durch intermittierendes Klebebonden auf eine Vliesstoffträgerschicht laminiert ist, welche eine größere Stärke als die der Substratschicht aufweist.

12. Mehrlagiges Isolierprodukt mit entgegengesetzt weisenden Seitenkanten und einer Vielzahl von inneren luft- und wasserdampfdurchlässigen Isolierwatteschichten und wenigstens einer inneren reflektierenden Schicht, welche zwei der Watteschichten trennt, wobei die inneren Schichten zwischen ersten und zweiten äußeren Schichten des Isoliermaterials nach Anspruch 11 eingebettet sind.

13. Mehrlagiges Isolierprodukt nach Anspruch 12, wobei wenigstens eine innere reflektierende Schicht ein Isoliermaterial nach einem der Ansprüche 1 bis 12 umfasst.

14. Gebäude, in welchem ein Isoliermaterial oder -produkt nach einem der Ansprüche 1 bis 13 verbaut ist.

15. Verwendung eines Isoliermaterials oder -produkts nach einem der Ansprüche 11 bis 14 in einer oder als eine Dachisolierung oder eine Dachunterlage in einem Gebäude, in einer oder als eine Wandisolierung in einem Gebäude oder in einer oder als eine Bodenisolierung in einem Gebäude.

## Revendications

1. Matériau isolant pouvant être utilisé dans, ou quand il est utilisé dans, le bâtiment et/ou la construction, contient une couche de substrat monolithique, dimensionnellement stable, imperméable à l'air portant une couche basse émissivité recouvrante ayant une émissivité inférieure à 0,5, la couche de substrat et la couche basse émissivité étant imperméables à l'eau liquide et perméables à la vapeur humide, **caractérisé en ce que** la couche basse émissivité est appliquée à la couche de substrat sous la forme d'un revêtement organique mince contenant une dispersion de matière réfléchissant les infrarouges.

2. Matériau isolant selon la revendication 1, dans lequel la couche de substrat et la couche basse émissivité ont une perméabilité à la vapeur humide supérieure à 360 g/m²/jour, et dans lequel le poids du revêtement organique se situe dans la plage de 0,8 à 2,5 g/m².

3. Matériau isolant selon la revendication 1 ou la revendication 2, dans lequel la couche de substrat est à base de cellulose, d'un dérivé de cellulose ou de cellulose régénérée et a une épaisseur dans la plage de 15 à 350 µm.

4. Matériau isolant selon l'une quelconque des revendications 1 à 3, dans lequel le revêtement comprend l'un quelconque ou plusieurs des composés suivants : dérivés de cellulose et/ou polymères organiques synthétiques et/ou polymères naturels et leurs dérivés.

5. Matériau isolant selon la revendication 4, dans lequel le revêtement comprend l'un des composés suivants : éthers de cellulose, esters et nitrocellulose, esters polyacryliques, copolymères de polyacétate de vinyle, polyuréthanes, polyamides, polysulfones et copolymères d'alcool polyvinylique, amidons, chitine, fructane, lignine, gommes et protéines et leurs dérivés.

6. Matériau isolant selon l'une quelconque des revendications 1 à 5, dans lequel le revêtement comprend un copolymère séquencé.

7. Matériau isolant selon la revendication 6, dans lequel le copolymère séquencé est choisi parmi les matériaux qui permettent un transfert élevé de la vapeur humide par diffusion moléculaire et ont des chaînes polymères comportant des sections à haute et basse cristallinité.

8. Matériau isolant selon la revendication 6 ou la revendication 7, dans lequel le copolymère séquencé est choisi parmi l'un quelconque ou plusieurs des suivants : résines styrène-butadiène et polyuréthanes hydrophiles comprenant les polyester uréthanes, les polyéther uréthanes, les polycarbonate uréthanes et les polymères polyuréthane-urée.

9. Matériau isolant selon l'une quelconque des revendications 1 à 8, dans lequel la matière réfléchissante dans le revêtement comprend une dispersion d'un pigment métallique ou un pigment qui présente une surface métallique réfléchissante.

10. Matériau isolant selon l'une quelconque des revendications 1 à 5, principalement dérivé de matières premières durables ou renouvelables.

11. Matériau isolant selon l'une quelconque des revendications 1 à 10, dans lequel la couche de support est stratifiée par une liaison adhésive intermittente à une couche de support de type étoffe non tissée ayant une résistance mécanique qui est supérieure à celle de la couche de substrat.

12. Produit isolant multicouche ayant des bords latéraux en vis-à-vis et comprenant une pluralité de couches de ouate isolante perméables à l'air intérieur et à la vapeur humide et au moins une couche réfléchissante intérieure séparant deux desdites couches de ouate, les couches intérieures étant prises en sandwich entre des première et seconde couches extérieures du matériau isolant selon la revendication 11.

13. Produit isolant multicouche selon la revendication 12, dans lequel au moins une couche réfléchissante intérieure comprend un matériau isolant selon l'une quelconque des revendications 1 à 12.

14. Bâtiment incorporant un matériau ou un produit isolant selon l'une quelconque des revendications 1 à 13.

15. Utilisation d'un matériau ou d'un produit isolant selon l'une quelconque des revendications 11 à 14 dans ou à titre d'isolation de toiture ou de sous-couche de toiture dans un bâtiment ; dans ou à titre d'isolation de murs dans un bâtiment, ou dans ou à titre d'isolation de sol dans un bâtiment.
